# EUROPEAN PATENT APPLICATION

(11) **EP 2 682 592 A2**
(43) Date of publication of application: **08.01.2014**
(21) Application number: 13173522.7
(22) Date of filing: 25.06.2013
(51) Int. Cl.: F02M 35/10, F02B 37/00

(54) **Intake air supply structures of turbo superchargers**

(30) Priority: 06.07.2012 JP 2012153018
(71) Applicant: Kabushiki Kaisha Toyota Jidoshokki, Kariya-shi, Aichi 448-8671 (JP)
(72) Inventor: Kobayashi, Hiaso, Kariya-shi,, Aichi 448-8671 (JP)
(74) Representative: TBK

(57) **Abstract**

Embodiments of the present invention may include an intake air supply structure for a turbo supercharger (1) which includes a exhaust side impeller (22), a intake side impeller (21) of a compressor, an intake flow path (11), and an intake air swirling means (50; 50A; 50B; 50C). The exhaust side impeller (22) is rotated by exhaust gas discharged from an internal combustion engine. The intake side impeller (21) is connected to the exhaust side impeller (22), and rotates to force-feed intake air into the internal combustion engine. The intake flow path (11) guides the intake air to the intake side impeller (21). The intake air swirling means (50; 50A; 50B; 50C) is provided on an outer periphery of the intake flow path (11). The intake air swirling means (50; 50A; 50B; 50C) is configured to extract a portion of the intake air inside the intake flow path (11) temporarily to an exterior of the intake flow path (11), and to swirl the extracted intake air in the same direction as a rotational direction of the intake side impeller (21) along an outer periphery of the intake flow path (11), and to discharge the swirled intake air into the intake flow path (11).

## Description

This application claims priority to Japanese patent application serial number 2012-153018, the contents of which are incorporated herein by reference.

Embodiments of the present invention relate to an intake air supply structure of a turbo supercharger.

In order to improve engine output characteristics, etc., the engine is provided with a turbo supercharger. The turbo supercharger supercharges intake air through rotation of a turbine. The turbine utilizes a flow of exhaust gas so that the turbine is to be rotated. Various types of turbo superchargers have been developed. In a high speed range (high rotation range), the flow rate of the exhaust gas is high, so that sufficient acceleration performance, etc. can be easily obtained. On the other hand, in the low speed range (the low rotation range), the flow rate of the exhaust gas is low, so that the supercharging efficiency is low. This results in difficulty in attaining sufficient acceleration performance, etc.

In a conventional structure, two large and small turbo superchargers for low speed and high speed are provided to enable supercharging from the low speed range. Another conventional structure provides motor-assisted driving of the supercharger in the low speed range. In still another conventional structure, assist air in the high speed range is charged and then used in the low speed range.

Japanese Laid-Open Patent Publication No. 2000-136727 discloses a supercharger having an intake air force-feeding device. The intake air force-feeding device is provided inside an intake flow path through which intake air is guided to an intake side impeller. The intake air force-feeding device is an axial fan having a motor and fan blades. The intake air force-feeding device force-feeds the intake air toward the intake side impeller while swirling it.

Japanese Laid-Open Patent Publication No. 2005-351193 discloses a supercharger which restores a portion of force-fed air on a downstream side of the intake side impeller to the upstream side. The portion of the air is restored so as to cause it to flow in a circumferential direction along an inner wall of the intake flow path on the upstream side of the intake side impeller. As a result, the intake air is swirled.

Japanese Laid-Open Patent Publication No. 2008-025402 discloses a turbo supercharger for an internal combustion engine having a branching-off flow path connected to the intake path. A portion of the intake air is extracted from the branching-off flow path, and is compressed by a compressor before being directly supplied to the intake side impeller.

A turbo supercharger for a vehicle requires a space allowing it to be mounted in the vehicle and requires a drive power source for the supercharger. Thus, it is not desirable to provide both large and small turbo superchargers. It is not desirable to provide a motor of large drive force and size to assist the driving of the supercharger. It is not desirable to provide an air charge tank for assisting the driving of the supercharger with the charged air.

According to Japanese Laid-Open Patent Publication No. 2000-136727, there is provided, within the intake flow path, a fan having a diameter substantially equal to the inner diameter of the intake flow path. The fan force-feeds the intake air to the intake side impeller. The volume of the air sent by the fan must be more than the maximum intake air flow rate of the turbo supercharger. As a result, the fan and the driving means are rather large, making them difficult to install inside the vehicle. It may be difficult to provide drive power. When stopped, the fan constitutes intake resistance. Thus, it is necessary to constantly rotate the fan. When the quantity of air sent by the fan is less than the intake air flow rate, the fan arranged in the intake flow path constitutes intake resistance. Thus, it is necessary for the quantity of air sent by the fan to fluctuate in conformity with the fluctuation of the intake air volume in accordance with operating conditions. Accordingly, the intake resistance may increase, in particular, in the high speed range (the high rotation range).

According to Japanese Laid-Open Patent Publication No. 2005-351193, the air compressed and restored in the intake flow path expands in all directions when released into the intake flow path. Thus, a portion of the expanded air flows back towards the upstream side, and may result in an increase in intake resistance. In the low speed range (the low rotation range), the pressure of the air on the downstream side of the intake side impeller is not so high. Thus, in some cases, it is impossible to restore the requisite flow rate for swirling the intake air. As a result, there is the possibility that the supercharging efficiency in the low speed range cannot be improved to a sufficient degree.

The object of the technique disclosed in Japanese Laid-Open Patent Publication No. 2008-025402 is to suppress generation of surging in the turbo supercharger and to achieve an improvement in terms of surge limit. The object of this technique is not to improve the supercharging efficiency in the low speed range. The compressor compresses air, and supplies it directly to the intake side impeller. Thus, as the same as in the case of Japanese Laid-Open Patent Publication No. 2005-351193, air may expand in all directions and hinder the rotation of the impeller.

Therefore, there is need in the art for a turbo supercharger capable of achieving a further improvement in terms of supercharging efficiency in the low rotation range without involving a reduction in the supercharging efficiency in the high speed range.

According to an aspect of the present invention, there is provided an intake air supply structure for a turbo supercharger which includes an exhaust side impeller of a turbine, an intake side impeller of a compressor, an intake flow path, and an intake air swirling means. The exhaust side impeller is rotated by exhaust gas discharged from an internal combustion engine. The intake side impeller is connected to the exhaust side impeller, and rotates to force-feed intake air toward the internal combustion engine. The intake flow path guides the intake air to the intake side impeller. The intake air swirling means is provided on an outer periphery of the intake flow path. The intake air swirling means is configured to extract a portion of the intake air inside the intake flow path temporarily to an exterior of the intake flow path. It also swirls the extracted intake air in the same direction as a rotational direction of the intake side impeller along an outer periphery of the intake flow path. Finally, it discharges the swirled intake air into the intake flow path.

The intake air swirling means is arranged in the outer periphery of the intake flow path. That is, the intake air swirling means is not arranged in the intake air path, and does not involve an increase in intake resistance. The intake air swirling means extracts a portion of the intake air temporarily to the exterior of the intake flow path, and swirls the extracted intake air to restore it into the intake flow path. Thus, in the low ration range, the intake air swirling means swirls the intake air, thereby achieving an improvement in terms of the intake efficiency of the intake side impeller. As a result, it is possible to achieve an improvement in terms of supercharging efficiency. In the high rotation range, the operation of the intake air swirling means may be stopped to stop extracting a portion of the intake air to the exterior of the intake flow path. As a result, it is possible to maintain the requisite level of supercharging efficiency in the high rotation range without involving a reduction in the same.

According to another aspect of the invention, the intake air swirling means may have an introduction port, an annular swirling space, a swirling means, a driving means, and a discharge port. The introduction port may be provided in the inner wall of the intake flow path so as to allow extraction of a portion of the intake air in the intake flow path to the exterior of the intake flow path. The annular swirling space may be formed in an annular configuration along the outer periphery of the intake flow path, and may guide the intake air extracted from the introduction port. The swirling means may swirl the intake air in the annular swirling space in the same direction as the rotational direction of the intake side impeller. The driving means may rotate the swirling means. The discharge port may be provided in the inner wall of the intake flow path so as to cause the intake air swirled in the annular swirling space to be discharged into the intake flow path. Thus, it is possible to achieve a further improvement in terms of supercharging efficiency in the low rotation range without involving a reduction in supercharging efficiency in the high rotation range.

According to another aspect of the invention, the intake air swirling means may be formed in the compressor. Thus, the intake air supply structure may be compact. The intake air swirling means may swirl the intake air in the vicinity of the intake side impeller, so that it is possible to achieve an improvement in terms of supercharging efficiency.

According to another aspect of the invention, the introduction port may be situated on the intake air upstream side of the discharge port and in the rotational direction of the intake side impeller. The air released into the intake flow path from the discharge port expands in all directions. The air flowing back towards the intake air upstream side may be extracted to the exterior of the intake flow path from the introduction port situated in the same direction. As a result, an increase in intake resistance due to the air flowing in reverse is suppressed, making it possible to suppress a reduction in supercharging efficiency.

According to another aspect of the invention, the number of introduction ports may be the same as the number of discharge ports, and each introduction port may be situated adjacent to each discharge port.

According to another aspect of the invention, the intake air swirling means may have an introduction path. The introduction path may communicate between the introduction port and the annular swirling space and extend from the introduction port toward the annular swirling space in the rotational direction of the intake side impeller, from the upstream side toward the downstream side of the intake air. Thus, it is possible to smoothly guide the intake air taken-in through the introduction port to the annular swirling space. As a result, it is possible to efficiently extract the intake air toward the annular swirling space and to swirl it.

According to another aspect of the invention, the intake air swirling means may have a discharge path. The discharge path may communicate between the discharge port and the annular swirling space, and extend from the annular swirling space toward the discharge port in the rotational direction of the intake side impeller, from the upstream side toward the downstream side of the intake air. Thus, it is possible to smoothly guide the swirled air from the annular swirling space to the discharge port. As a result, it is possible to efficiently force-feed the intake air discharged from the discharge port toward the intake side impeller. As a result, it is possible to achieve an improvement in terms of supercharging efficiency.

According to another aspect of the invention, the discharge path may be formed to extend along the tangential direction of the inner wall of the intake flow path. Thus, it is possible to spirally force-feed the intake air discharged from the discharge port. As a result, it is possible to achieve an improvement in terms of supercharging efficiency.

Additional objects, features, and advantages, of the present invention will be readily understood after reading the following detailed description together with the claims and the accompanying drawings, in which:
FIG. 1 is a schematic view of an intake air supply structure of a turbo supercharger;
FIG. 2 is a cross-sectional view of a part of the intake air supply structure shown by arrow II in FIG. 1;
FIG. 3 is a cross-sectional view of the intake air supply structure taken along line III-III in FIG. 2;
FIG. 4 is a cross-sectional view of the intake air supply structure taken along line IV-IV in FIG. 3;
FIG. 5 is a cross-sectional view for showing relative locations of introduction ports and discharge ports;
FIG. 6 is a cross-sectional view for showing an embodiment of a driving means for rotating a swirling means (fan);
FIG. 7 is a cross-sectional view taken along line VII-VII in FIG. 6;
FIG. 8 is a cross-sectional view for showing another embodiment of a driving means for rotating a swirling means (fan);
FIG. 9 is a cross-sectional view taken along line IX- IX in FIG. 8;
FIG. 10 is a cross-sectional view for showing another embodiment of a swirling means and driving means;
FIG. 11 is a cross-sectional view of FIG. 10;
FIG. 12 is a graph for showing pressures at different positions; and
FIG. 13 is a cross-sectional view for showing each position indicated in FIG. 12.

### DETAILED DESCRIPTION OF THE INVENTION

Each of the additional features and teachings disclosed above and below may be utilized separately or in conjunction with other features and teachings to provide improved intake air supply structures of turbo superchargers. Representative examples of the present invention, which utilize many of these additional features and teachings both separately and in conjunction with one another, will now be described in detail with reference to the attached drawings. This detailed description is merely intended to teach a person of ordinary skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful configurations of the present teachings.

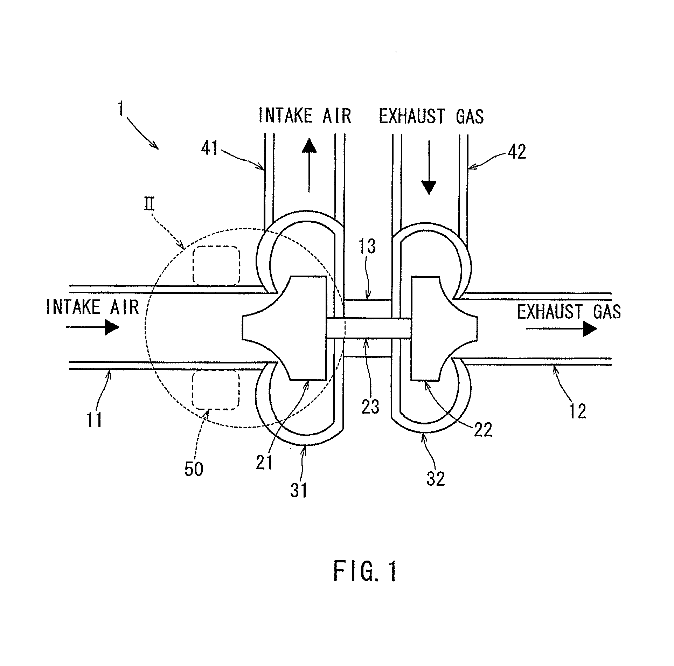

As shown in FIG. 1, a turbo supercharger 1 is provided with a turbine shaft 23, an intake side impeller 21, an exhaust side impeller 22, an intake side housing 31, an exhaust side housing 32, a bearing housing 13, an intake flow path 11 or a portion thereof, an exhaust flow path 12 or a portion thereof, a flow path 41 or a portion thereof, and a flow path 42 or a portion thereof. The turbo supercharger 1 of FIG. 1 has no variable nozzle. It is also possible for the turbo supercharger 1 to have a variable nozzle for adjusting the flow velocity of the exhaust gas flowing to the exhaust side impeller 22.

The intake side impeller 21 is provided at one end in the axial direction of the turbine shaft 23. The exhaust side impeller 22 is provided at the other end of the turbine shaft 23.

The exhaust side housing 32 covers the periphery of the exhaust side impeller 22. The exhaust side housing 32 is connected to the flow path 42 and the exhaust flow path 12. The flow path 42 allows the exhaust gas from the engine to flow into the exhaust side housing 32. The exhaust flow path 12 allows the exhaust gas to flow from the exhaust side housing 32 toward a purification device or the like after the rotation of the exhaust side impeller 22.

The bearing housing 13 rotatably supports the turbine shaft 23 and covers the turbine shaft 23. One end in the axial direction of the bearing housing 13 is connected to the intake side housing 31. The other end of the bearing housing 13 is connected to the exhaust side housing 32.

The intake side housing 31 covers the intake side impeller 21. The intake side housing 31 is connected to the intake side flow path 11 and the flow path 41. The intake flow path 11 allows the intake air from the air cleaner or the like to flow into the intake side housing 31. The intake flow path 11 has a tubular configuration for guiding the intake air to the intake side impeller 21. The flow path 41 allows the intake air supercharged by the intake side impeller 21 to flow toward the engine. An intake air swirling means 50 is provided on the outer periphery of the intake flow path 11 adjacent to the intake side impeller 21.

The intake air swirling means 50 can temporarily extract a portion of the intake air in the intake flow path 11 to the exterior of the intake flow path 11. The intake air swirling means 50 swirls the extracted intake air in the same direction as the rotational direction of the intake side impeller 21 along the outer peripheral surface of the intake flow path 11. The intake air swirling means 50 discharges the swirled intake air into the intake flow path 11. As a result, there can be formed a spiral flow swirling in the same direction as the rotational direction of the intake side impeller 21 and advancing in the direction of the intake side impeller 21. The spiral flow helps to achieve a further improvement in terms of supercharging efficiency.

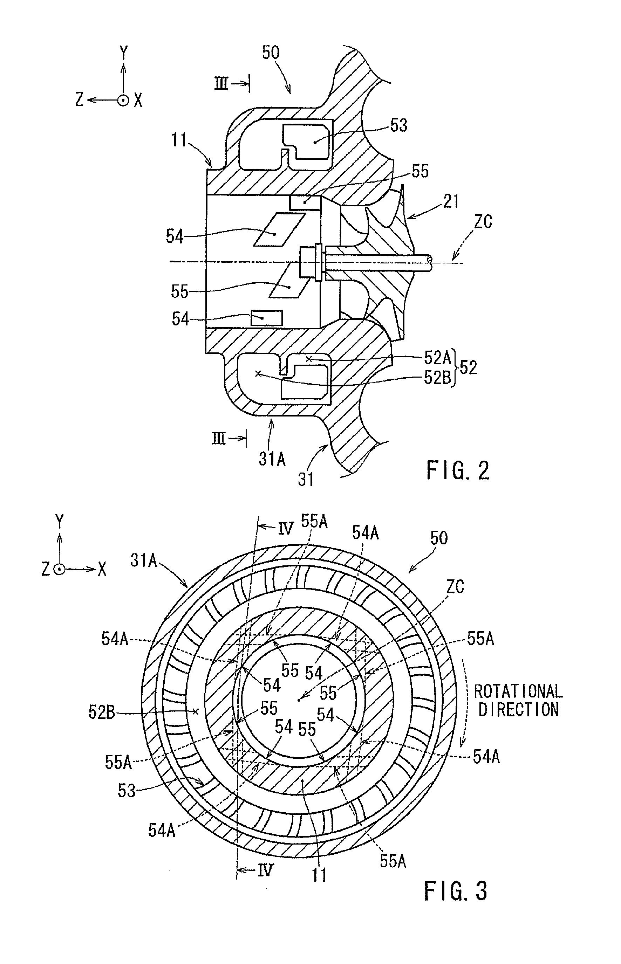

As shown in FIGS. 2 and 3, the intake air swirling means 50 has an annular swirling space 52, a housing 31A, a swirling means (fan) 53, introduction ports 54, discharge ports 55, introduction paths 54A, discharge paths 55A, and a driving means. The annular swirling space 52 includes a suction side branching-off path 52A and a re-charging side branching-off path 52B.

The suction side branching-off path 52A and the re-charging side branching-off path 52B are formed in an annular configuration to extend along the outer periphery of the intake flow path 11. The suction side branching-off path 52A and the re-charging side branching-off path 52B are spaces surrounded by the housing 31A. The suction side branching-off path 52A and the re-charging side branching-off path 52B communicate with each other. The re-charging side branching-off path 52B is situated on the upstream side in the direction of the rotation axis ZC of the suction side branching-off path 52A. As a result, it is possible to reduce the length in the direction of the rotation axis ZC of the intake air swirling means 50 including the introduction ports 54 and the discharge ports 55.

The introduction ports 54 are provided in the inner wall of the intake flow path 11. The introduction ports 54 temporarily extract or suck a portion of the intake air in the intake flow path 11 to the exterior of the intake flow path 11. A portion of the intake air in the intake flow path 11 is guided to the suction side branching-off path 52A via the introduction paths 54A from the introduction ports 54.

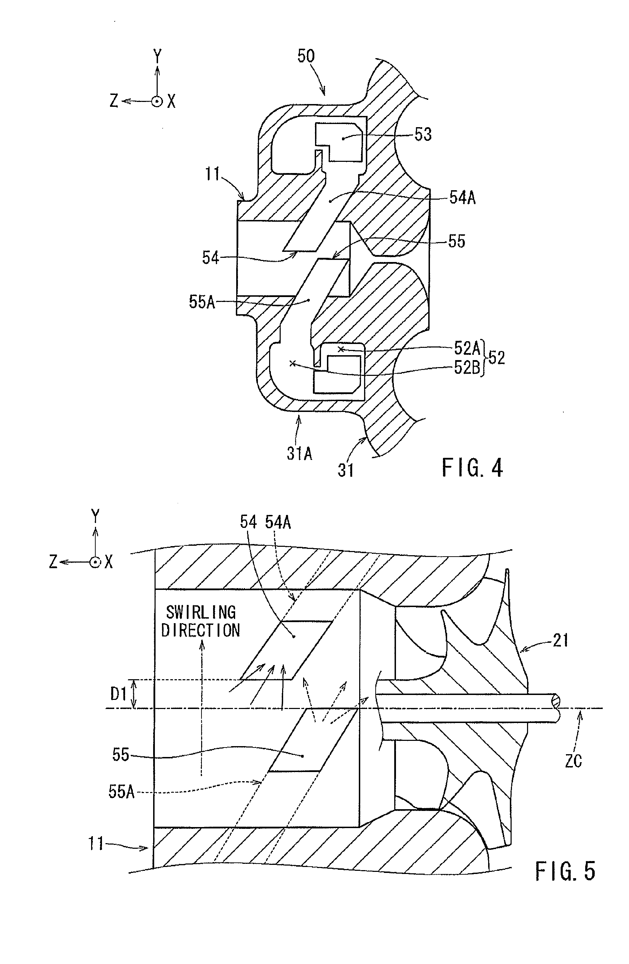

The introduction paths 54A establish communication between the introduction ports 54 and the suction side branching-off path 52A. The introduction paths 54A extend from the introduction ports 54 toward the suction side branching-off path 52A in the same direction as the rotational direction of the intake side impeller 21 along the tangential direction of the inner wall of the intake flow path 11 (see FIG. 3). The introduction paths 54A are inclined from the upstream side toward the downstream side of the intake air (see FIG. 4). As a result, a portion of the intake air in the intake flow path 11 is sucked along the inner wall surface of the intake flow path 11. The intake air in the intake flow path 11 can be guided so as to spiral.

The discharge ports 55 are provided in the inner wall of the intake flow path 11. The discharge ports 55 restore the intake air swirled in the annular swirling space 52 to the intake flow path 11. The intake air guided to the suction side branching-off path 52A is swirled by the fan 53 in the same direction as the rotational direction of the intake side impeller 21. The intake air is sent from the suction side branching-off path 52A to the re-charging side branching-off path 52B, and flows from the re-charging side branching-off path 52B via the discharge paths 55A before being discharged into the intake flow path 11 from the discharge ports 55.

The discharge paths 55A establish communication between the discharge ports 55 and the re-charging branching-off path 52B. The discharge paths 55A extend from the re-charging side branching-off path 52B toward the discharge ports 55 in the same direction as the rotational direction of the intake side impeller 21 along the tangential direction of the inner wall of the intake flow path 11 (see FIG. 3). The discharge paths 55A are inclined from the upstream side toward the downstream side of the intake air (see FIG. 4).

As a result, air is re-charged into the intake flow path 11 while flowing along the inner wall surface of the intake flow path 11 from the discharge ports 55. The re-charged air causes the intake air in the intake flow path 11 to spiral. It is desirable for the discharge ports 55 to be arranged so as to be adjacent to the upstream side of the intake side impeller 21 or directly on the upstream side thereof. This helps to achieve a further improvement in terms of supercharging efficiency.

The fan 53 is arranged in the suction side branching-off path 52A. The fan 53 is rotated in the same direction as the rotational direction of the intake side impeller 21 as needed by the driving means. As a result, the fan 53 sucks a portion of the intake air in the intake flow path 11 into the suction side branching-off path 52A from the introduction ports 54. The fan 53 causes the intake air to swirl in the suction side branching-off path 52A in the same direction as the rotational direction of the intake side impeller 21, and sends the intake air to the re-charging branching-off path 52B. The air is discharged from the discharge ports 55 into the intake flow path 11 via the discharge paths 55A.

As shown in FIG. 3, the number of the introduction ports 54 is the same as the number of the discharge ports 55. For example, four introduction ports 54 and four discharge ports 55 are provided. As shown in FIG. 5, each discharge port 55 is adjacent to each introduction port 54. Each introduction port 54 is situated on the intake air upstream side of the corresponding discharge port 55. Each introduction port 54 is situated away from the corresponding discharge port 55 in the rotational direction of the intake side impeller 21 or the intake air swirling direction.

The introduction ports 54 are at a distance D1 from the discharge ports 55 in the rotational direction of the intake side impeller 21. As stated above, there may be a distance in the rotational direction between the introduction ports 54 and the discharge ports 55. Instead, it is also possible for each discharge port 55 to be situated at the same position as the corresponding introduction port 54 in the rotational direction, and for each discharge port 55 to be situated on the upstream side of the corresponding introduction port 54.

The air discharged into the intake flow path 11 from the discharge ports 55 expands in all directions. The air expanding toward the intake air upstream side can constitute intake resistance. However, the air can be instantaneously sucked out to the exterior of the intake flow path 11 through the introduction ports 54. As a result, it is possible to suppress a reduction in supercharging efficiency.

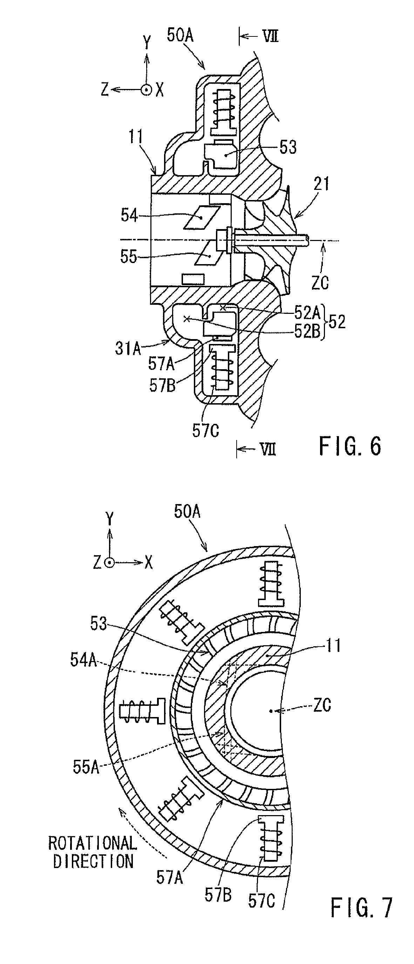

The turbo supercharger 1 may have an intake air swirling means 50A as shown in FIGS. 6 and 7. The intake air swirling means 50A has a driving means for rotating the fan 53. The driving means has a plurality of stators and a rotor. Each stator has a core 57B and a coil 57C. The rotor has a magnet 57A provided on the outer peripheral side of the fan 53. Further, the driving means has a control means (not shown) configured to control the energization of the coils 57C. The control means energizes the coils 57C of the stators in an appropriate order and combination. As a result, the fan 53 rotates at a desired rotational speed.

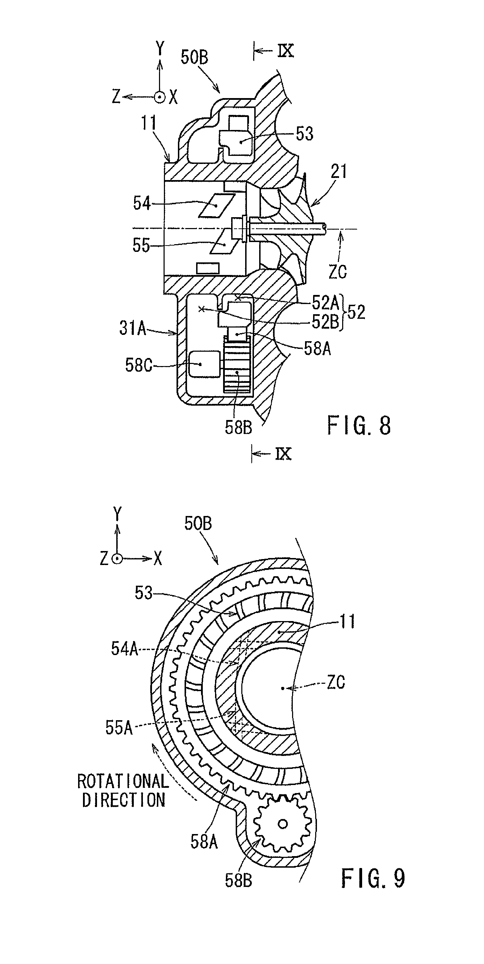

Instead of the intake air swirling means 50A shown in FIGS. 6 and 7, the turbo supercharger 1 may have an intake air swirling means 50B as shown in FIGS. 8 and 9. The intake air swirling means 50B has a driving means, and the driving means has a motor 58C, a first gear 58A, and a control means. A second gear 58B is mounted to the motor 58C. The first gear 58A is mounted to the outer periphery of the fan 53. The control means controls the energization of the motor 58C. The control means drives the motor 58C with appropriate electric power (electric current). As a result, the fan 53 rotates at a desired rotational speed.

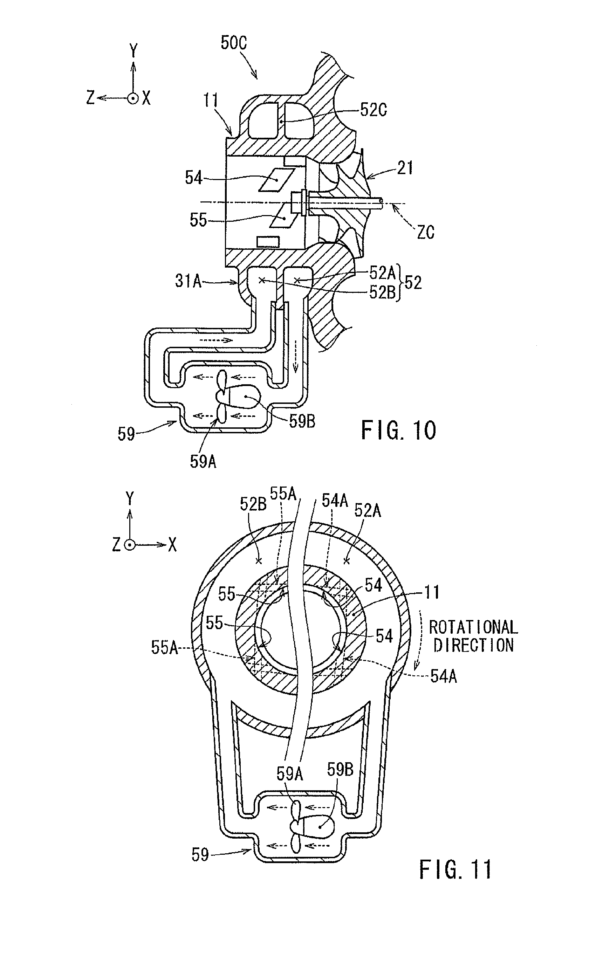

Instead of the intake air swirling means 50A shown in FIGS. 6 and 7, the turbo supercharger 1 may have an intake air swirling means 50C as shown in FIGS. 10 and 11. Instead of the fan 53 shown in FIG. 6, the intake air swirling means 50C has a swirling unit 59 as shown in FIGS. 10 and 11. The suction side branching-off path 52A and the re-charging side branching-off path 52B are divided from each other by a partition wall 52C. Communication is established between the suction side branching-off path 52A and the re-charging side branching-off path 52B by the swirling unit 59.

As shown in FIGS. 10 and 11, the swirling unit 59 has a motor (driving means) 59B and a fan 59A (swirling means) for swirling the intake air. One end of the swirling unit 59 is connected to the suction side branching-off path 52A by piping. The other end of the swirling unit 59 is connected to the re-charging side branching-off path 52B by piping. The swirling unit 59 sucks the intake air in the suction side branching-off path 52A. The swirling unit 59 force-feeds the intake air to the re-charging side branching-off path 52B, and discharges the air from the discharge ports 55 through the discharge paths 55A.

In order for the intake air in the suction side branching-off path 52A and the intake air in the re-charging side branching-off path 52B to swirl in the same direction as the rotational direction of the intake side impeller 21, the fan 59A and each piping of the swirling unit extends along the rotational direction of the intake side impeller 21.

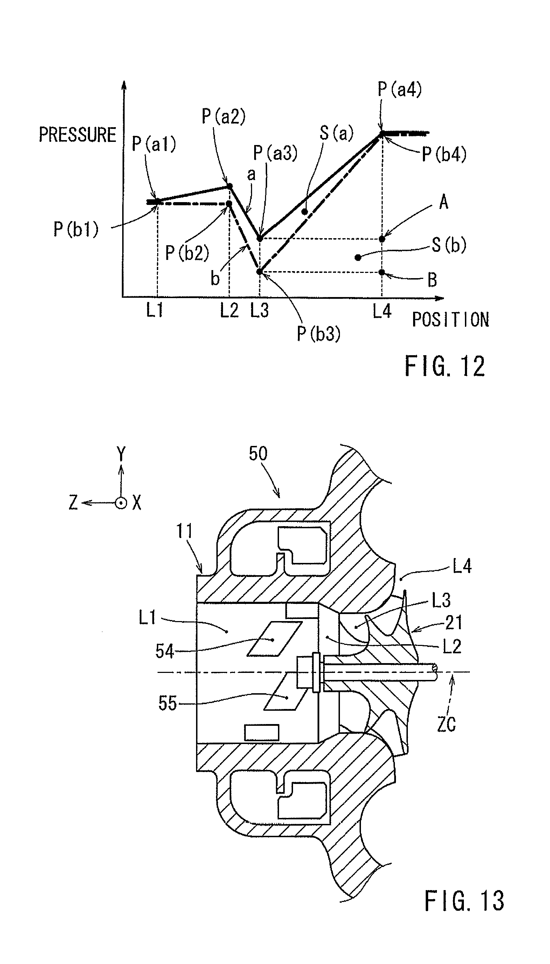

FIG. 13 shows positions L1 to L4 in the vicinity of the intake air swirling means 50 and of the intake side impeller 21. FIG. 12 shows the pressures at the positions L1 to L4. The solid line a in FIG. 12 indicates the pressure in the case where there is provided the intake air swirling means 50. The dotted line b in FIG. 12 indicates the pressure in the case where no intake air swirling means 50 is provided.

As shown in FIG. 13, inside the intake flow path 11, position L1 is situated on the upstream side of the intake air swirling means 50, and on the upstream side of the intake side impeller 21 by a predetermined distance. Position L2 is adjacent to the upstream side of the intake side impeller 21. Position L3 is a place where the intake air exists immediately after it has been sucked by the intake side impeller 21. Position L4 is a place where the intake air exists immediately after it has been discharged by the intake side impeller 21.

As shown in FIG. 12, the pressures at positions L1 to L4 indicated by the solid line a are pressures P(a1) to P(a4). The pressures at positions L1 to L4 indicated by the dotted line b are pressures P(b1) to P(b4). In the case where no intake air swirling means 50 is provided, the pressures at positions L1 and L2 are constant as indicated by the dotted line b. That is, P(b1) = P(b2).

In the case where the intake air swirling means 50 is provided, P(a1) < P(a2) as indicated by the solid line a. The reason for this is that the intake air swirling means 50 is force-feeding the intake air from the discharge ports 55 toward the intake side impeller 21. Suppose, for example, there is provided inside the intake flow path 11 a fan or the like configured to force-feed the intake air toward the intake side impeller 21. In this case, when the volume of air force-fed is larger than the intake air amount, the pressure increases at position L2. When the volume of air force-fed is smaller than the intake air amount, the pressure is reduced at position L2.

The pressure P(a3) at position L3 when the intake air is swirled by the intake air swirling means 50 is higher than the pressure P(b3) at position L3 when the intake air is not being swirled. That is, P(a3) > P(b3).

In the case indicated by the solid line a, the intake air is swirled in the same direction as the rotational direction of the intake side impeller 21. The relative movement speed of the impeller leading edge with respect to the swirling intake air at the inlet portion is reduced as compared with the case where the intake air is not swirling. Thus, the amount of air flowing into the intake side impeller 21, that is, the amount of air sucked-in by the intake side impeller 21, increases. As a result, the amount or density of the intake air taken-in by the intake side impeller 21 is larger in the case indicated by the solid line a where the intake air swirling means 50 is provided than in the case indicated by the dotted line b where no intake air swirling means 50 is provided. This means a reduction in the substantial pressure ratio of the compression by the intake side impeller 21, (P(a4)/P(a3)). This results in an improvement in terms of supercharging efficiency and an increase in supercharging volume.

In the case illustrated in FIG. 12, supercharging is effected such that the pressures indicated by the solid line a and by the dotted line b coincide with each other at position L4. That is, P(a4) = P(b4). In the case where supercharging is effected such that the pressure indicated by the solid line a is P(a4) at position L4, the requisite power for driving the intake side impeller corresponds to the area S(a) of a triangle whose apexes are P(a3), P(a4), and A. In the case where supercharging is effected such that the pressure indicated by the dotted line b is P(b4) at position L4, the requisite power for driving the intake side impeller corresponds to the area S(b) of a triangle whose apexes are P(b3), P(b4), and B.

The triangle whose apexes are P(a3), P(a4), and A, has a base of a length as measured from P(a3) to A, and a height of a magnitude ranging from P(a3) to P(a4). The triangle whose apexes are P(b3), P(b4), and B, has a base of a length as measured from P(b3) to B, and a height of a magnitude ranging from P(b3) to P(b4). The bases of the two triangles are of the same length. The height of the triangle whose apexes are P(a3), P(a4), and A, is lower than the height of the triangle whose apexes are P(b3), P(b4), and B. Thus, the area S(a) < the area S(b).

As a result, when the supercharging volume obtained is the same, it is possible for the driving force of the intake side impeller to be smaller in the case indicated by the solid line a than in the case indicated by the dotted line b. When the driving force is the same, it is possible to attain a higher pressure in the case indicated by the solid line a than in the case indicated by the dotted line b. That is, the supercharging efficiency is higher in the case of the solid line a than in the case of the dotted line b.

As described above, the intake air swirling means 50, 50A to 50C, temporarily extracts a portion of the intake air in the intake flow path 11 to the exterior of the intake flow path 11. The intake air swirling means 50, 50A to 50C, force-feeds the intake air toward the intake side impeller 21 and into the intake flow path 11 so as to cause it to swirl in the same direction as the rotational direction of the intake side impeller 21.

In the case where the intake air swirling means 50, 50A to 50C, is driven, the intake air in the intake flow path 11 spirals. That is, the intake air flows toward the intake side impeller 21 while swirling in the same direction as the rotational direction of the intake side impeller 21. As a result, the compression efficiency of the intake side impeller 21 is improved. The generation of surge is suppressed, making it possible to perform supercharging in the low speed range, where stable compression is typically difficult. As a result, the intake efficiency of the intake side impeller 21 is further improved, and the supercharging efficiency can be further improved. In the idling state, in which the engine RPM is 1000 RPM or less, a turbo lag is likely to be generated. Starting from the idling state, the turbo supercharger 1 can attain the turbo supercharging effect.

Fans 53 and 59A rotate in the low speed range, where it is rather difficult to attain the supercharging effect. Thus, a rotation of approximately 1000 RPM suffices as the RPM of the fans 53 and 59A, which means they can be driven with relatively low drive power. The driving means (motor or the like) may be small, and can be easily mounted outside the intake flow path 11. In the high speed range, the fans 53 and 59A may be kept at rest if a sufficient supercharging effect is obtainable without having to rotate the fans 53 and 59A. Thus, it is possible to select fans dedicated for use in the low speed range, where it is difficult to perform a stable compression. As a result, the intake air supply structure of the turbo supercharger 1 is of small size, low power consumption, and low cost. Thus, the turbo supercharger 1 can exhibit a structure suitable for vehicles.

The introduction ports 54 and the discharge ports 55 are formed in the inner wall surface of the intake flow path 11. Preferably, there exists no obstacle in the intake flow path 11 which hinders the flow of the intake air. Thus, even in the case where the fan is stopped, there is involved no increase in intake resistance. Thus, the supercharging efficiency is not reduced, whereby wasteful power consumption is suppressed.

While the embodiments of invention have been described with reference to specific configurations, it will be apparent to those skilled in the art that many alternatives, modifications and variations may be made without departing from the scope of the present invention. Accordingly, embodiments of the present invention are intended to embrace all such alternatives, modifications and variations that may fall within the spirit and scope of the appended claims. For example, embodiments of the present invention should not be limited to the representative configurations, but may be modified, for example, as described below.

As described above, the intake air swirling means 50 may be formed in the intake side housing 31. Alternatively, the intake air swirling means may be formed in the vicinity of the intake housing 31, such as on a pipe of the intake flow path 11 or flow path 41.

The intake air swirling means 50, 50A to 50C, may be provided in the turbo supercharger 1, which has no variable nozzle as described above. Alternatively, it is also possible for the intake air swirling means to be provided in a variable geometry type turbo supercharger having a variable nozzle. Alternatively, it is also possible for the intake air swirling means to be provided in various other types of turbo supercharger.

The introduction ports 54 and the discharge ports 55 may be of the above-described configuration or of some other configuration. The fans 53 and 59A may be of the above-described configuration or of some other configuration.
Embodiments of the present invention may include an intake air supply structure for a turbo supercharger (1) which includes a exhaust side impeller (22), a intake side impeller (21) of a compressor, an intake flow path (11), and an intake air swirling means (50; 50A; 50B; 50C). The exhaust side impeller (22) is rotated by exhaust gas discharged from an internal combustion engine. The intake side impeller (21) is connected to the exhaust side impeller (22), and rotates to force-feed intake air into the internal combustion engine. The intake flow path (11) guides the intake air to the intake side impeller (21). The intake air swirling means (50; 50A; 50B; 50C) is provided on an outer periphery of the intake flow path (11). The intake air swirling means (50; 50A; 50B; 50C) is configured to extract a portion of the intake air inside the intake flow path (11) temporarily to an exterior of the intake flow path (11), and to swirl the extracted intake air in the same direction as a rotational direction of the intake side impeller (21) along an outer periphery of the intake flow path (11), and to discharge the swirled intake air into the intake flow path (11).

## Claims

1. An intake air supply structure for a turbo supercharger (1) comprising:
an exhaust side impeller (22) of a turbine rotated by exhaust gas discharged from an internal combustion engine;
an intake side impeller (21) of a compressor connected to the exhaust side impeller (22), the intake side impeller (21) configured to rotate to force-feed intake air toward the internal combustion engine;
an intake flow path (11) configured to guide the intake air to the intake side impeller (21); and
an intake air swirling means (50; 50A; 50B; 50C) provided on an outer periphery of the intake flow path (11), the intake air swirling means (50; 50A; 50B; 50C) configured to extract a portion of the intake air inside the intake flow path (11) temporarily to an exterior of the intake flow path (11), and to swirl the extracted intake air in the same direction as a rotational direction of the intake side impeller (21) along the outer periphery of the intake flow path (11), and to discharge the swirled intake air into the intake flow path (11).

2. The intake air supply structure for a turbo supercharger (1) of claim 1, wherein the intake air swirling means (50; 50A; 50B; 50C) comprises:
an introduction port (54) provided in an inner wall of the intake flow path (11) so as to allow extracting a portion of the intake air in the intake flow path (11) to the exterior of the intake flow path (11),
an annular swirling space (52) formed in an annular configuration along the outer periphery of the intake flow path (11) to guide the intake air extracted from the introduction port (54),
a swirling means (50; 50A; 50B; 50C) configured to swirl the intake air in the annular swirling space (52) in the same direction as the rotational direction of the intake side impeller (21),
a driving means configured to rotate the swirling means (50; 50A; 50B; 50C), and
a discharge port (55) provided in the inner wall of the intake flow path (11) so as to cause the intake air swirled in the annular swirling space (52) to be discharged into the intake flow path (11).

3. The intake air supply structure for a turbo supercharger (1) of claim 2, wherein the intake air swirling means (50; 50A; 50B; 50C) is formed in the compressor.

4. The intake air supply structure for a turbo supercharger (1) of claim 2 or 3, wherein the introduction port (54) is situated on an intake air upstream side and in the rotational direction of the intake side impeller (21) relative to the discharge port (55).

5. The intake air supply structure for a turbo supercharger (1) of any one of claims 2 to 4, wherein a number of the introduction ports (54) is the same as a number of the discharge ports (55), and each of the introduction ports (54) is situated adjacent to each of the discharge ports (55).

6. The intake air supply structure for a turbo supercharger (1) of any one of claims 2 to 5, wherein the intake air swirling means (50; 50A; 50B; 50C) comprises an introduction path (54A) communicating between the introduction port (54) and the annular swirling space (52), and
wherein the introduction path (54A) extends from the introduction port (54) toward the annular swirling space (52) in the rotational direction of the intake side impeller (21), from an upstream side toward a downstream side of the intake air.

7. The intake air supply structure for a turbo supercharger (1) of any one of claims 2 to 6, wherein the intake air swirling means (50; 50A; 50B; 50C) comprises a discharge path (55A) communicating between the discharge port (55) and the annular swirling space (52), and
wherein the discharge path (55A) extends from the annular swirling space (52) toward the discharge port (55) in the rotational direction of the intake side impeller (21), from an upstream side toward a downstream side of the intake air.

8. The intake air supply structure for a turbo supercharger (1) of claim 7, wherein the discharge path (55A) is formed to extend along the tangential direction of the inner wall of the intake flow path (11).
